# EUROPEAN PATENT APPLICATION

(11) **EP 2 759 695 A1**
(43) Date of publication of application: **30.07.2014**
(21) Application number: 14151854.8
(22) Date of filing: 21.01.2014
(51) Int. Cl.: F03B 7/00, F03B 3/10, F03B 15/14, F04B 19/12

(54) **Screw generator or screw pump**

(30) Priority: 23.01.2013 BE 201300051
(71) Applicant: Hanmutec BVBA, 9170 Sint-Gillis-Waas (BE)
(72) Inventor: Heyndrickx, Dany, 9170 Sint-Gillis-Waas (BE)
(74) Representative: Van hunsel, Lieven M.S.

(57) **Abstract**

Screw generator or screw pump (1) comprising a screw (2), which screw comprises one or several helically shaped flanges (4) defining one or several passages (5), whereby in one or several of the one or several passages (5) are provided adjustable narrowing means or sealing means (6).

## Description

The present invention concerns a screw generator or a screw pump.

A screw pump is a device for pumping a liquid from a lower to a higher level.

Conversely, a screw generator is a device for generating energy from a downward flow of liquid, from a higher to a lower level.

In both cases, the device includes a trough or gutter arranged between the lower en higher amount of liquid and a screw provided in the trough or gutter formed of one or several helically shaped flanges, usually mounted on a shaft or tube.

In the case of a screw pump, the device is provided with drive means for driving the screw.

In the case of a screw generator, the device is provided with generator means for converting the kinetic energy of the rotating screw into another energy form, for example electrical energy.

If the generator means generate electrical energy, we speak of the production of hydroelectricity.

Compared to Kaplan turbines and Banki turbines, screw generators are advantageous in that they can also be used at a small drop height.

Since these devices usually have a fixed rotational speed, the problem is that with a decreasing water flow on the supply side, for example when using the screw generator in a decreasing flow of the river, the water level upstream of the device will decrease, which is usually undesirable.

In the case of a screw generator, this declining water level upstream of the dam also has a negative effect on the production of electricity.

Indeed, the decreasing water level at the water inlet of the screw generator implies a lower drop height and thus a quadratic decreasing energy production.

It is possible to make the rotational speed of the Archimedean screw vary by means of a frequency converter and to adapt it to the available flow.

However, this involves a high investment cost and a decrease of the overall performance over a part of the operating range.

As said, screw pumps and screw generators usually consist of a trough or gutter which may be connected to the environment or erected in a rotatable manner, and a screw, usually consisting of a bar or a shaft provided with blades, i.e. one or several helically shaped flanges. Usually, a screw with several passages is selected, formed by the same number of paddle blades or helically shaped flanges.

Screws with three to five passages are very common.

The present invention aims to remedy the above-mentioned and other disadvantages of the known screw generator or screw pump.

To this end, the invention concerns a screw generator or a screw pump comprising a screw, which screw comprises one or several helically shaped flanges defining one or several passages, whereby adjustable narrowing means or sealing means are provided in one or several of the one or several passages.

The narrowing means or sealing means, provided in one or several passages of the screw, can maximally open the passageway of the passage in which they are provided, partly narrow it or completely shut it to thus regulate the flow through the screw and thus through the screw generator or screw pump.

The narrowing means or sealing means can be designed such that they may assume positions or settings between an entirely open and entirely closed position or setting.

The narrowing means or sealing means can be provided with or connected to drive means which may modify their position or setting.

These drive means can be connected to a system which, as a function of a level measurement in the short or longer distance of the screw generator or screw pump, imposes a suitable position or setting on the narrowing means or sealing means.

As a result, the flow through a screw generator can be adjusted to the available flow, for example in a river, in such a manner that a predominantly constant water level will be provided upstream of the screw generator.

Thanks to this arrangement, it is possible to maintain a constant drop height and thus obtain a higher energy production.

The advantages increase in terms of percentage for smaller drop heights.

For screw pumps, this system can be used in a similar manner to adjust the pump flow at a fixed rotational speed.

Indeed, in a similar manner the flow through a screw pump according to the invention can be adjusted to the available feed flow rate of the liquid to be pumped, the arrangement being such that a predominantly constant water level is provided for upstream of, i.e. at the bottom of the screw pump. Thus, the rotational speed of the screw pump can be kept essentially constant.

It is clear that all passages or merely one or some of the passages can be provided with narrowing means or sealing means.

These individual narrowing means or sealing means can be controlled jointly or individually and mutually divergent.

The narrowing means or sealing means of different passages can be arranged by two or more or as integrated all together.

The narrowing means or sealing means can be provided in any position or height between both far ends, i.e. provided in any position along the longitudinal axis of the Archimedean screw.

According to a special embodiment, said one or several helically shaped flanges of the screw are provided on a central tube or hollow shaft, whereby a compressed air reservoir is provided in the inner space, or whereby the inner space is sealed or can be sealed, such that the thus created inner space may serve as a compressed air reservoir.

This compressed air reservoir can be connected to the drive means in order to set said one or several narrowing means or sealing means.

According to an alternative embodiment, said one or several helically shaped flanges of the screw are provided on a central tube or hollow shaft, and at least parts of the drive means and/or parts of said one or several narrowing means or sealing means are provided in the inner space of the tube or hollow shaft.

In order to better explain the characteristics of the invention, the following preferred embodiment of a screw generator according to the invention is described as an example only without being limitative in any way, with reference to the accompanying drawings, in which:
figure 1 is a side elevation of a screw generator according to the invention;

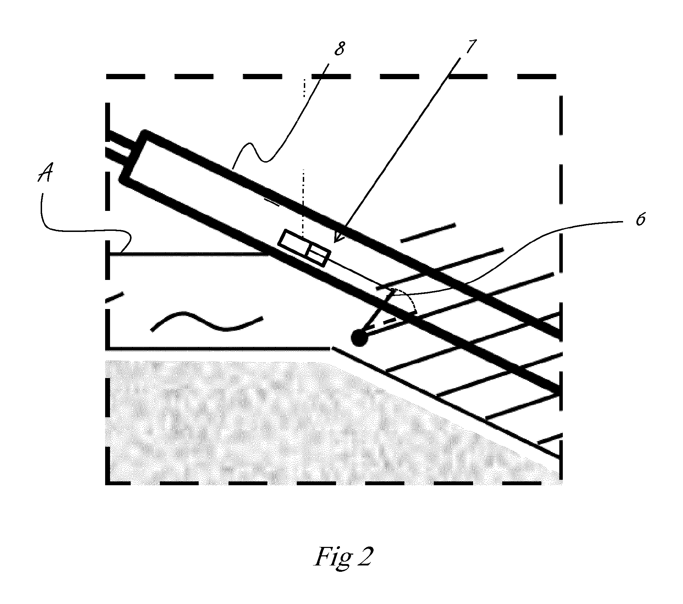

figure 2 represents the part as indicated by arrow F2 in figure 1 in more detail.

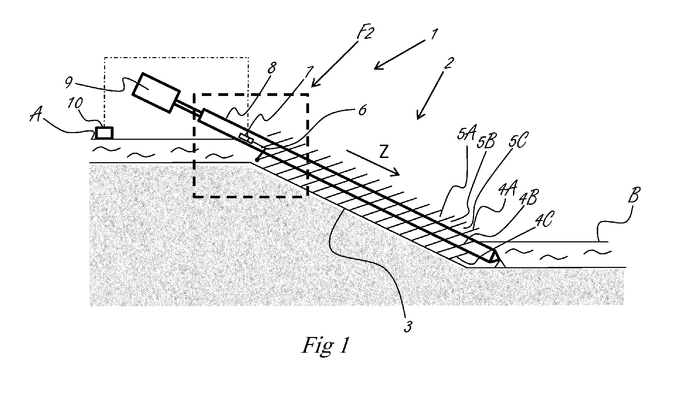

Figure 1 represents a screw generator 1 according to the invention, comprising a screw 2 which is provided in a trough or gutter with a bottom 3.

By way of example, the screw 2 comprises three helically shaped flanges 4A, 4B and 4C in this case, defining three passages 5A, 5B and 5C.

In one of the passages 5B are provided narrowing means or sealing means 6 in this case, schematically represented as an adjustable valve 6.

The narrowing means or sealing means 6 are connected to drive means 7 in this case, having the shape of a pneumatic cylinder with a piston and piston rod connected to the adjustable valve 6.

The screw generator 1 is designed in this case for generating energy from the downward water flow as of a higher level A to a lower level B according to the direction Z.

The trough or gutter is provided between the higher level A and the lower level B.

The helically shaped flanges 4 are provided on a tube 8 in this case.

The tube 8 is connected to generator means 9 in order to generate energy from the rotation of the screw 2, for example electrical energy which, given the application, is called hydro-electricity.

At the higher level A is provided a height measuring device 10, communicating directly or indirectly, for example via a control unit, with the drive means 7.

The working of the screw generator 1 according to the invention is simple and as follows.

Water flows through the screw generator 1, i.e. through the trough or gutter, and makes the screw 2 rotate as a result of the force of the water exerted on the flanges 4.

If the water level decreases at the higher level, this will be observed by the height measuring device 10 measuring the height of the water level there.

The height measuring device 10 makes direct or indirect contact, possibly via a control unit, with the drive means 7 and thus controls the narrowing means or sealing means 6 in such a way that the section of the passage 5 concerned is enlarged, reduced or closed.

As a result, the flow through the screw 2 and thus through the screw generator 1 is enlarged or reduced, as a result of which the water level at the higher level A increases or decreases, with the ultimate goal of keeping the water level stable.

Thus, the flow through a screw generator 1 is adjusted to the available flow in the river, such that a predominantly constant water height is provided upstream of the screw generator 1.

Thanks to this system, it is possible to maintain a constant drop height and to thus obtain a higher energy production.

The screw generator 1 runs at a substantially constant rotational speed but adjusts the flow or flow rate so that a substantially constant water level is obtained upstream of the device.

The stable water level upstream of the screw generator 1, where a dam may be provided if appropriate, provides for a constant drop height, which is ideal for an optimal energy extraction, given the feed flow rate of the stream.

It is clear that the narrowing means or sealing means 6, provided in one or several passages 5 of the screw 2, can enlarge, narrow or entirely close the passageway of a passage 5 in which they are provided.

The narrowing means or sealing means 6 can be made such that they may take positions between an entirely open and an entirely closed position.

It is clear that all passages 5 or only one or several of the passages 5 may be provided with narrowing means or sealing means 6.

These individual narrowing means or sealing means 6 can be controlled jointly or individually and mutually divergent.

The narrowing means or sealing means 6 of different passages 5 can be arranged by two or more or as integrated all together.

The narrowing means or sealing means 6 can be provided in any position or height between both far ends, i.e. provided in any position along the longitudinal axis of the Archimedean screw.

A passage 5 may have no, one or even several narrowing means or sealing means 6, possibly distributed over different positions along the longitudinal axis of the screw 2, and/or radially distributed in a given crossa-section of the screw 2.

According to a special embodiment, said one or several helically shaped flanges 4 of the screw 2 are provided on a central tube 8 or hollow shaft, whereby in the inner space thereof is provided a compressed air reservoir, or whereby the inner space is sealed or can be sealed, such that the thus obtained inner space may serve as a compressed air reservoir.

This compressed air reservoir can be connected to drive means 7 in order to set said one or several narrowing means or sealing means 6.

According to an alternative embodiment said one or several helically shaped flanges 4 of the screw 2 are provided on a central tube 8 or hollow shaft, and at least parts of the drive means 7 and/or parts of said one or several narrowing means or sealing means 6 are provided in the inner space of the tube 8 or hollow shaft.

The invention is by no means restricted to the embodiment of a screw generator 1 according to the invention described by way of example and represented in the accompanying drawings; on the contrary, such a screw generator according to the invention can be made in all sorts of other ways while still remaining within the scope of the invention.

## Claims

1. Screw generator or screw pump (1) comprising a screw (2), which screw comprises one or several helically shaped flanges (4) defining one or several passages (5), whereby in one or several of the one or several passages (5) are provided adjustable narrowing means or sealing means (6).

2. Screw generator or screw pump (1) according to claim 1, **characterised in that** the narrowing means or sealing means (6), provided in one or several passages (5) of the screw (2), can enlarge, restrict or close the passageway of the passage (5) in which they are provided so as to control the flow rate through the screw (2) and thus through the screw generator (1) or screw pump.

3. Screw generator or screw pump (1) according to claim 1 or 2, **characterised in that** the narrowing means or sealing means (6) are made such that they can take positions between the entirely open and entirely closed position.

4. Screw generator or screw pump (1) according to claim 1, 2 or 3, **characterised in that** the narrowing means or sealing means (6) are provided with or are connected to drive means (7) which may alter the position or setting of the narrowing means or sealing means (6).

5. Screw generator or screw pump (1) according to claim 4, **characterised in that**, upstream of the screw (2), at a short or longer distance from the screw generator (1) or screw pump, i.e. in the case of a screw generator (1) at the higher level A and in the case of a screw pump at the lower level B, it is provided with a height measuring device (10) for measuring the water level, and **in that** the drive means (7) are directly or indirectly connected to the height measuring device (10).

6. Screw generator or screw pump (1) according to claim 5, **characterised in that** the drive means (7) and the height measuring device (10) are connected to a control unit controlling the drive means (7) in such a way that, as a function of the level measurement performed by the height measuring device (10), a suitable position or setting will be imposed on the narrowing means or sealing means (6) in order to keep the liquid level upstream of the screw (2) predominantly stable.

7. Screw generator or screw pump (1) according to one or several of the preceding claims, **characterised in that** all the passages (5) or merely one or some of the passages (5) are provided with narrowing means or sealing means (6).

8. Screw generator or screw pump (1) according to one or several of the preceding claims, **characterised in that** the individual narrowing means or sealing means (6) are controlled jointly or individually and mutually divergent.

9. Screw generator or screw pump (1) according to one or several of the preceding claims, **characterised in that** the narrowing means or sealing means (6) of different passages (5) are arranged by two or grouped in larger groups or even as integrated all together.

10. Screw generator or screw pump (1) according to one or several of the preceding claims, **characterised in that** the narrowing means or sealing means (6) are provided at one of the free ends of the screw (2).

11. Screw generator or screw pump (1) according to one or several of the preceding claims, **characterised in that** the narrowing means or sealing means (6) are provided in a position between the free ends of the screw (2).

12. Screw generator or screw pump (1) according to one or several of the preceding claims, **characterised in that** a passage (5) is provided with no, one or even several narrowing means or sealing means (6), possibly distributed over different positions along the longitudinal axis of the screw (2), and/or radially distributed in a specific cross section of the screw (2).

13. Screw generator or screw pump (1) according to one or several of the preceding claims, **characterised in that** the one or several helically shaped flanges (4) of the screw (2) are provided on a central tube (8) or hollow shaft, whereby a compressed air reservoir is provided in the inner space of the tube (8) or hollow shaft, or whereby the inner space is made such that it is sealed or can be sealed, such that the thus obtained inner space may serve as a compressed air reservoir which can be connected to drive means (7) in order to set said one or several narrowing means or sealing means (6).

14. Screw generator or screw pump (1) according to one or several of the preceding claims, **characterised in that** one or several helically shaped flanges (4) of the screw (2) are provided on a central tube (8) or hollow shaft, whereby at least parts of the drive means (7) and/or parts of the one or several narrowing means or sealing means (6) are provided in the inner space of the tube (8) or hollow shaft.
